# EUROPÄISCHE PATENTSCHRIFT

(11) **EP 1 185 776 B1**
(45) Veröffentlichungstag und Bekanntmachung des Hinweises auf die Patenterteilung: **05.04.2006**
(21) Anmeldenummer: 00908813.9
(22) Anmeldetag: 23.02.2000
(51) Int. Cl.: F02F 7/00, F16C 9/02

(54) **FORMTEIL AUS LEICHTMETALL, INSBESONDERE KURBELGEHÄUSE FÜR EINEN VERBRENNUNGSMOTOR**
LIGHT METAL MOLDED PART, ESPECIALLY A CRANKCASE FOR AN INTERNAL COMBUSTION ENGINE
PIECE FA ONNEE EN ALLIAGE LEGER, NOTAMMENT CARTER DE VILEBREQUIN POUR UN MOTEUR A COMBUSTION INTERNE

(30) Priorität: 19.03.1999 AT 49799
(43) Veröffentlichungstag der Anmeldung: 13.03.2002
(73) Patentinhaber: Miba Sintermetall Aktiengesellschaft, 4663 Laakirchen (AT); KS Aluminium-Technolgie Aktiengesellschaft, 74172 Neckarsulm (DE)
(72) Erfinder: RATZI, Raimund, A-4600 Wels (AT); MENZL, Karl-Heinz, D-81735 München (DE)
(74) Vertreter: Hübscher, Helmut
(86) Internationale Anmeldenummer: PCT/AT2000/000047
(87) Internationale Veröffentlichungsnummer: WO 2000/057047

(56) Entgegenhaltungen:
- EP-A- 0 145 393
- EP-A- 0 363 159
- WO-A-95/31637
- US-A- 5 449 421
- US-A- 5 816 710

## Beschreibung

Die Erfindung bezieht sich auf einen Formteil aus Leichtmetall, insbesondere Kurbelgehäuse für einen Verbrennungsmotor, mit Aufnahmeöffnungen für Befestigungsschrauben, mit deren Hilfe auf den Formkörper in einem Leichtmetallbereich Druckspannungen ausübbar sind.

Da Formteile aus Leichtmetall im Vergleich zu üblichen stählernen Befestigungsschrauben ein unterschiedliches Wärmedehnungsverhalten zeigen, ändern sich die Spannungsverhältnisse aufgrund von Druckkräften, die mit Hilfe von stählernen Befestigungsschrauben auf Formkörper aus Leichtmetall ausgeübt werden, mit der Temperatur, was sich beispielsweise durch eine erhebliche Verringerung der Klemmkräfte bemerkbar machen kann. Um bei Lagerstühlen von Kurbelgehäusen aus Leichtmetall eine übermäßige Vergrößerung des Lagerspiels bei höheren Betriebstemperaturen zu vermeiden, ist es bekannt (US 5 203 854 A), die Kurbelwellenlager mit den Lagerschrauben in Graugußeinsätzen zu lagern, die in die Lagerwände eingegossen sind. Damit bestimmen die einen erheblichen Teil der Lagerwände bildenden Graugußeinsätze und nicht die anschließenden Leichtmetallbereiche der Lagerwände das Dehnungsverhalten, so daß im Bereich der Kurbelwellenlager und ihrer Verschraubung weitgehend einheitliche Wärmedehnungsverhältnisse zu erwarten sind, was sich vorteilhaft auf das Lagerspiel bzw. die Festigkeit der Schraubverbindung auswirkt. Nachteilig bei diesen bekannten Kurbelgehäusen ist allerdings unter anderem, daß wegen des die Schraubenkräfte aufnehmenden Graugußeinsatzes und der damit verbundenen geometrischen Abmessungen dieser Einsätze der Gewichtsvorteil der Leichtmetallwände zu einem erheblichen Teil aufgehoben wird.
Ein kurbelgehäuse gemäß oberbegriff von Anspruch 1 ist aus der US-A-5816710 bekannt (siehe Fig. 2). Allerding ist dort das eingegossene Teil 12 kein Sinterkörper.

Der Erfindung liegt somit die Aufgabe zugrunde, einen Formteil aus Leichtmetall, insbesondere ein Kurbelgehäuse für einen Verbrennungsmotor, der eingangs geschilderten Art so auszugestalten, daß trotz des unterschiedlichen Wärmedehnungsverhaltens des Leichtmetalls und der Befestigungsschrauben vorteilhafte Befestigungsbedingungen geschaffen werden können, und zwar unter einer weitgehenden Ausnützung der Gewichtsvorteile des Leichtmetalls.

Die Erfindung löst die gestellte Aufgabe dadurch, daß im den Druckspannungen ausgesetzten Leichtmetallbereich wenigstens ein offenporiger Sinterkörper unter einer Infiltration des Leichtmetalls zumindest in die Poren einer Oberflächenschicht eingegossen ist und daß der einen geringeren Wärmeausdehnungskoeffizienten als das Leichtmetall aufweisende Sinterkörper zumindest zusammen mit dem infiltrierten Leichtmetall eine wenigstens der Leichtmetallfestigkeit entsprechende Festigkeit aufweist.

Ein Sinterkörper, dessen Wärmedehnungskoeffizient kleiner als der des Leichtmetalls ist, vermag das Wärmedehnungsverhalten des Leichtmetalls unter der Voraussetzung zu ändern, daß der Sinterkörper mit dem Leichtmetall schubfest verbunden ist und der Verbund eine wenigstens der Leichtmetallfestigkeit entsprechende Festigkeit aufweist, so daß das Leichtmetall an einer freien Wärmedehnung im Bereich des Sinterkörpers gehindert wird. Die schubfeste Verbindung zwischen dem Leichtmetall und dem Sinterkörper wird dadurch erreicht, daß beim Gießen des Formteils vorzugsweise in einem Druckgußverfahren die Leichtmetallschmelze zumindest in die Poren einer Oberflächenschicht des Sinterkörpers infiltriert. Dadurch können sich beim fertigen Formteil im Übergangsbereich vom Leichtmetall zum Sinterkörper ausreichend große Schubspannungen aufbauen, um eine Relativbewegung zwischen dem Sinterkörper und dem Leichtmetall zu unterbinden. Die Sinterkörper, die entsprechend den jeweiligen Belastungsanforderungen des Formteiles eingesetzt werden können, können dabei vergleichsweise kleine Abmessungen erhalten, so daß die mit diesen Sinterkörpern verbundene Gewichtserhöhung beschränkt bleibt, zumal die geforderte Porosität der Sinterkörper eine Gewichtsverminderung im Vergleich zu nicht gesinterten Einsätzen mit sich bringt Da die Festigkeit des Sinterkörpers mit einer Infiltration des Leichtmetalls ansteigt, kann unter Umständen der Sinterkörper ohne infiltriertem Leichtmetall eine geringere Festigkeit als das Leichtmetall aufweisen und trotzdem den Festigkeitsanforderungen in bezug auf eine Begrenzung der freien Ausdehnbarkeit des Leichtmetalls genügen, wenn der mit Leichtmetall infiltrierte Sinterkörper die hiefür erforderliche Festigkeit aufweist.

Besonders vorteilhafte Konstruktionsbedingungen können dadurch erreicht werden, daß der Sinterkörper einen an die Befestigungsschrauben angepaßten Wärmedehnungskoeffizienten aufweist, so daß sich hinsichtlich der Festigkeit der Schraubverbindung mit Verschraubungen von Stahlteilen vergleichbare Verhältnisse ergeben.

Da es vor allem um eine schubfeste Verbindung zwischen dem Sinterkörper und dem Leichtmetall durch eine Infiltration des Leichtmetalles in die Poren des Sinterkörpers geht, kann der Sinterkörper im Kernbereich eine höhere Dichte als im Oberflächenbereich aufweisen. Damit wird einerseits die Infiltration des Leichtmetalls in die Poren der Oberflächenschicht erleichtert und anderseits eine höhere Festigkeit der Sinterkörper erreicht. Die Festigkeit der eingegossenen Sinterkörper kann aber auch durch Armierungen verbessert werden. Diese Armierungen dürfen selbstverständlich die Infiltrierbarkeit des Sinterkörpers bei seinem Umgießen mit dem Leichtmetall nicht nachhaltig beeinträchtigen.

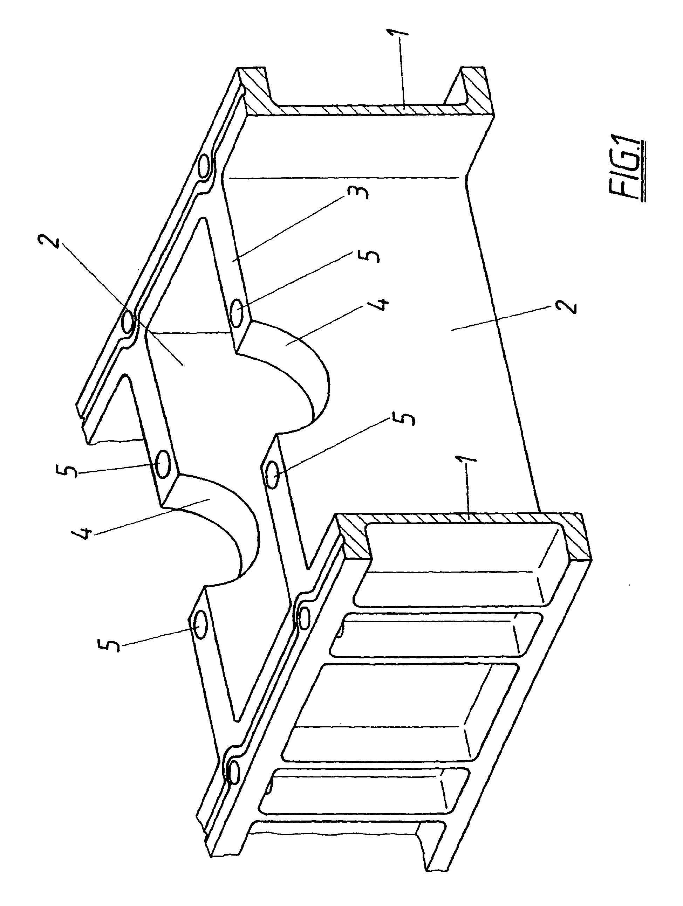

In der Zeichnung ist der Erfindungsgegenstand beispielsweise dargestellt. Es zeigen
- Fig. 1: das Gehäuseunterteil eines erfindungsgemäßen Kurbelgehäuses ausschnittsweise in einem vereinfachten Schaubild und
- Fig. 2: dieses Gehäuseunterteil in einem Querschnitt durch eine Lagerwand.

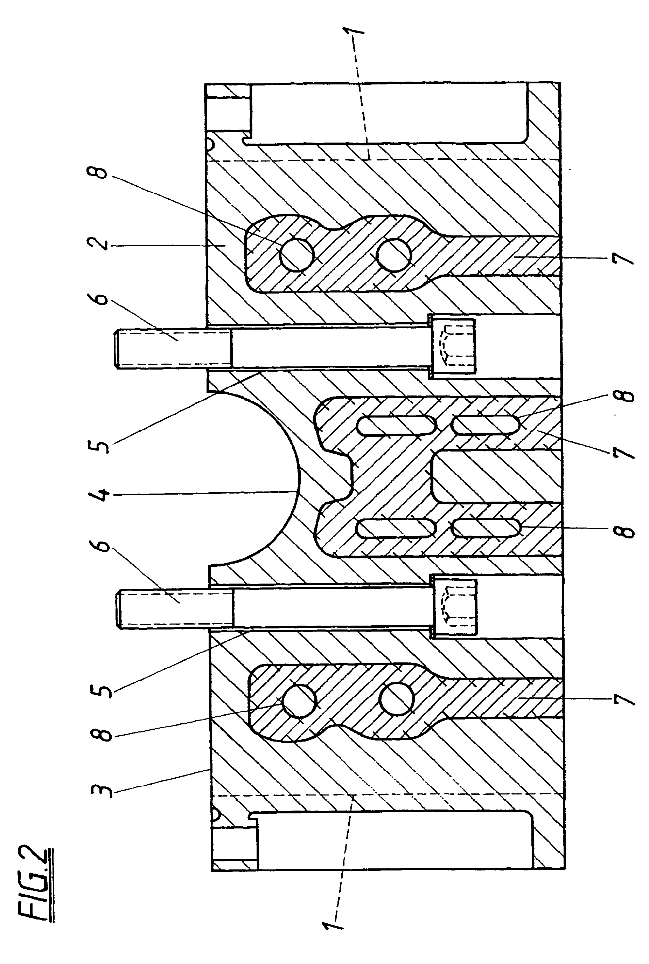

Das dargestellte Gehäuseunterteil eines erfindungsgemäßen Kurbelgehäuses aus Leichtmetall weist in herkömmlicher Weise der Länge nach verlaufende Gehäuseaußenwände 1 und diese Gehäuseaußenwände 1 verbindende, dazu quer ausgerichtete Lagerwände 2 auf, die von der Trennfläche 3 zum Gehäuseoberteil ausgehende, im Querschnitt halbkreisförmige Aufnahmen 4 für die Lagerschalen der Kurbelwellenlager bilden. Beidseits dieser Aufnahmen 4 sind in die Lagerwände 2 gebohrte Aufnahmeöffnungen 5 für Befestigungsschrauben 6 vorgesehen, über die die Lagerkräfte in die Lagerwände 2 abgetragen werden. Im Bereich der Aufnahmeöffnungen 5 sind in das Leichtmetall der Lagerwände 2 Sinterkörper 7 eingegossen, die eine ausreichende Porosität aufweisen, um eine Infiltration des Leichtmetalls in die Poren zumindest einer Oberflächenschicht zu ermöglichen. Diese Leichtmetallinfiltration der Sinterkörper 7 ist durch die in die Sinterkörper 7 hineinreichende Schraffur der Lagerwände 2 aus Leichtmetall in der Fig. 2 angedeutet. Zur Gewichtseinsparung können die Sinterkörper 7 mit Ausnehmungen 8 versehen sein.

Aufgrund der Infiltration der Sinterkörper 7 können die durch das unterschiedliche Wärmedehnungsverhalten des Leichtmetalls und der Sinterkörper auftretenden Schubspannungen vom Leichtmetall auf die Sinterkörper abgetragen werden, wodurch eine Relativbewegung zwischen dem Leichtmetall und den Sinterkörpern 7 verhindert wird. Die Lagerwände 2 aus Leichtmetall gleichen sich demnach zumindest im Bereich der Sinterkörper 7 an deren Wärmedehnungsverhalten an, wenn für eine ausreichende Festigkeit der Sinterkörper 7 gesorgt wird. Dies bedeutet, daß beispielsweise bei einer geforderten Anpassung des Wärmedehnungsverhaltens der Lagerwände 2 an das Wärmedehnungsverhalten der Befestigungsschrauben 6 die Sinterkörper 7 ein entsprechendes Wärmedehnungsverhalten aufweisen müssen, um das Wärmedehnungsverhalten der Lagerwände 2 zu begrenzen.

Um das Infiltrieren der Sinterkörper 7 mit dem Leichtmetall beim Gießen der Lagerwände 2 zu erleichtern, ist für eine entsprechende Porosität der Sinterkörper 7 zu sorgen, was beispielsweise durch eine entsprechende Wahl der Korngröße des Sinterpulvers und deren Verteilung oder durch die späteren Poren bestimmende Platzhalter ohne weiteres sichergestellt werden kann. Außerdem können die Sinterkörper 7 Legierungselemente, beispielsweise Nickel, enthalten, die mit dem Leichtmetall exotherm reagieren und damit die Viskosität der Schmelze herabsetzen. Die Sinterkörper können zur Sicherstellung einer ausreichenden Festigkeit auch eine Armierung aufweisen, die gemeinsam mit dem Sinterpulver verpreßt wird und beispielsweise aus einem Drahtgitter oder Verstärkungsfasern besteht.

Die Erfindung ist selbstverständlich nicht auf das dargestellte Ausführungsbeispiel beschränkt und kann überall dort eingesetzt werden, wo es gilt, Kräfte über Befestigungsschrauben in einen Formteil aus Leichtmetall bei unterschiedlichen Wärmebelastungen einzuleiten. Die Sinterkörper 7 können gemäß dem Ausführungsbeispiel neben den Aufnahmeöffnungen 5 für die Befestigungsschrauben 6 angeordnet sein, aber auch von den Befestigungsschrauben 6 durchsetzt werden. Es kommt lediglich darauf an, daß der durch die Befestigungsschrauben 6 unter Druckspannung gehaltene Leichtmetallbereich des Formkörpers an seinem freien Wärmedehnungsverhalten gehindert wird.

## Patentansprüche

1. Formteil aus Leichtmetall, insbesondere Kurbelgehäuse für einen Verbrennungsmotor, mit Aufnahmeöffnungen für Befestigungsschrauben, mit deren Hilfe auf den Formkörper in einem Leichtmetallbereich Druckspannungen ausübbar sind, **dadurch gekennzeichnet, daß** im den Druckspannungen ausgesetzten Leichtmetallbereich wenigstens ein offenporiger Sinterkörper (7) unter einer Infiltration des Leichtmetalls zumindest in die Poren einer Oberflächenschicht eingegossen ist und daß der einen geringeren Wärmeausdehnungskoeffizienten als das Leichtmetall aufweisende Sinterkörper (7) zumindest zusammen mit dem infiltrierten Leichtmetall eine wenigstens der Leichtmetallfestigkeit entsprechende Festigkeit aufweist.

2. Formteil nach Anspruch 1, **dadurch gekennzeichnet, daß** der Sinterkörper (7) einen an die Befestigungsschrauben (6) angepaßten Wärmedehnungskoeffizienten aufweist.

3. Formteil nach Anspruch 1 oder 2, **dadurch gekennzeichnet, daß** der Sinterkörper (7) im Kernbereich eine höhere Dichte als im Oberflächenbereich aufweist.

4. Formteil nach einem der Ansprüche 1 bis 3, **dadurch gekennzeichnet, daß** der Sinterkörper (7) eine Armierung aufweist.

## Claims

1. A light metal moulded part, especially a crankcase for an internal combustion engine, comprising receiving openings for fixing screws, with the aid of which compressive stresses can be exerted on the moulded body in a light metal area, **characterised in that** in the light metal area exposed to the compressive stresses at least one open-pored sintered body (7) is cast with infiltration of the light metal at least into the pores of a surface layer and **in that** the sintered body (7) having a lower thermal expansion coefficient than the light metal, at least together with the infiltrated light metal, has a strength corresponding at least to the light metal strength.

2. Moulded part according to claim 1, **characterised in that** the sintered body (7) has a thermal expansion coefficient adapted to the fixing screws (6).

3. Moulded part according to claim 1 or 2, **characterised in that** the sintered body (7) has a higher density in the core area than in the surface area.

4. Moulded part according to one of the claims 1 to 3, **characterised in that** the sintered body (7) has a reinforcement.

## Revendications

1. Pièce façonnée en alliage léger, en particulier carter de vilebrequin pour un moteur à combustion interne, avec des ouvertures de logement pour des vis de fixation, à l'aide desquelles des contraintes de compression peuvent être exercées sur le corps moulé, dans une zone de métal léger, **caractérisée en ce que**, dans les zones en métal léger exposées aux contraintes de compression est intégré, de moulage, au moins un corps fritté (7) à pores ouverts, avec une infiltration du métal léger au moins dans les pores d' une couche de surface, et **en ce que** le corps fritté (7), présentant un plus faible coefficient de dilatation thermique que le métal léger, présente au moins, conjointement avec le métal léger infiltré, une résistance correspondant au moins à la résistance du métal léger.

2. Pièce façonnée selon la revendication 1, **caractérisée en ce que** le corps fritté (7) présente un coefficient de dilatation thermique adapté aux vis de fixation (6).

3. Pièce façonnée selon la revendication 1 ou 2, **caractérisée en ce que** le corps fritté (7) présente, dans la zone de coeur, une densité plus élevée que dans la zone de surface.

4. Pièce façonnée selon l'une des revendications 1 à 3, **caractérisée en ce que** le corps fritté (7) présente une armature.
